# EUROPÄISCHE PATENTSCHRIFT

(11) **EP 3 977 837 B1**
(45) Veröffentlichungstag und Bekanntmachung des Hinweises auf die Patenterteilung: **28.08.2024**
(21) Anmeldenummer: 21188502.5
(22) Anmeldetag: 29.07.2021
(51) Int. Cl.: A01B 39/18, A01B 41/02, A01B 39/08, A01B 39/10

(54) **BODENBEARBEITUNGSVORRICHTUNG, VERFAHREN ZUR BODENBEARBEITUNG IN EINER REIHE EINER REIHENKULTUR UND LANDWIRTSCHAFTLICHE BODENBEARBEITUNGSMASCHINE**
SOIL WORKING DEVICE, SOIL WORKING METHOD IN A ROW OF A ROW CROP AND AGRICULTURAL SOIL WORKING MACHINE
DISPOSITIF DE TRAVAIL DU SOL, PROCÉDÉ DE TRAVAIL DU SOL EN RANG D'UNE CULTURE EN RANG ET MACHINE DE TRAVAIL DU SOL AGRICOLE

(30) Priorität: 01.10.2020 DE 102020125736
(43) Veröffentlichungstag der Anmeldung: 06.04.2022
(73) Patentinhaber: HORSCH LEEB Application Systems GmbH, 94405 Landau an der Isar (DE)
(72) Erfinder: LEEB, Theodor, 94405 Landau an der Isar (DE)
(74) Vertreter: v. Bezold & Partner Patentanwälte - PartG mbB

(56) Entgegenhaltungen:
- EP-A1- 3 387 890
- DE-A1- 3 131 356
- US-A- 1 048 808
- US-A- 3 463 239

## Beschreibung

Die Erfindung betrifft eine Bodenbearbeitungsvorrichtung, vorzugsweise zur Bodenbearbeitung in einer Reihe einer Reihenkultur. Die Erfindung betrifft zudem ein Verfahren zur Bodenbearbeitung in einer Reihe einer Reihenkultur. Darüber hinaus betrifft die Erfindung eine landwirtschaftliche Bodenbearbeitungsmaschine, vorzugsweise zur Bodenbearbeitung in einer Reihe einer Reihenkultur, insbesondere zur mechanischen Unkrautbekämpfung in einer Reihe einer Reihenkultur.

Zum Stand der Technik kann zunächst auf die US 3 463 239 A, US 1 048 808 A und DE 31 31 356 A1 verwiesen werden, die jeweils eine Bodenbearbeitungseinrichtung offenbaren.

Eine Bodenbearbeitungsvorrichtung, respektive eine landwirtschaftliche Bodenbearbeitungsmaschine wurde bspw. durch die EP 3 387 890 A1 bereits bekannt. Die Bodenbearbeitungsvorrichtung ist zur mechanischen Unkrautbekämpfung von in Reihen stehenden Pflanzen von Reihenkulturen eingerichtet und umfasst hierfür einen Zinkenrotor. Die Bodenbearbeitungsvorrichtung weist jedoch den Nachteil auf, dass durch diese oftmals nicht nur Unkraut, sondern auch die Pflanzen der Reihenkultur beschädigt werden, da mittels der Zinkenrotoren sowohl Unkraut als auch Pflanzen der Reihenkultur bearbeitet werden. Insbesondere erfolgt mittels des Zinkenrotor keine Unterscheidung zwischen Unkraut und Pflanzen und/oder Saatkörner der Reihenkultur.

Eine weitere Bodenbearbeitungsvorrichtung wurde durch die DE 197 23 505 A1 bekannt. Die Bearbeitung zwischen den Pflanzen der Reihenkultur erfolgt mittels eines in Drehung versetzten sternförmigen Rotationskörper, wobei dieser in einem Winkel gegenüber der Reihe angeordnet ist. Aufgrund des großen Durchmessers des Rotationskörpers kann dieses System aber nicht bei Reihenkulturen mit geringen Reihenabständen, wie bspw. 25cm oder 30cm eingesetzt werden. Darüber hinaus kann es durch die Winkelstellung des Rotationskörpers, in Abhängigkeit des Wachstumsstadium, zu Beschädigungen der Pflanzen der Reihenkultur kommen.

Aufgabe der Erfindung ist es somit, die beschriebenen Nachteile des Standes der Technik zu beseitigen. Insbesondere soll eine Bodenbearbeitung in einer Reihe einer Reihenkultur mit einfachen Mitteln wesentlich verbessert werden.

Diese Aufgaben werden gelöst durch eine Bodenbearbeitungsvorrichtung mit den Merkmalen des unabhängigen Anspruch 1, durch ein Verfahren zur Bodenbearbeitung in einer Reihe einer Reihenkultur mit den Merkmalen des Verfahrensanspruch 12, sowie durch eine landwirtschaftliche Bodenbearbeitungsmaschine mit den Merkmalen des Anspruch 17. Vorteilhafte Ausführungsformen und Weiterbildungen der Erfindung sind in den Ansprüchen und der folgenden Beschreibung unter teilweiser Bezugnahme auf die Figuren offenbart.

Es sei vorab darauf hingewiesen, dass zur Vermeidung von Wiederholungen im Zusammenhang mit der Bodenbearbeitungsvorrichtung offenbarte Merkmale auch verfahrensgemäß und für eine landwirtschaftliche Bodenbearbeitungsmaschine offenbart gelten und beanspruchbar sein sollen. In umgekehrter Weise gilt das gleiche, so dass auch alle Aspekte, erfindungsgemäße Merkmale und Ausführungsvarianten die im Zusammenhang mit dem Verfahren und/oder der landwirtschaftlichen Bodenbearbeitungsmaschine offenbart sind, demnach auch für die Bodenbearbeitungsvorrichtung offenbart und entsprechend beanspruchbar sind. Die vorgenannten Aspekte und erfindungsgemäßen Merkmale und Ausführungsvarianten, insbesondere im Hinblick auf die Bodenbearbeitungsvorrichtung, das Verfahren und/oder die landwirtschaftliche Bodenbearbeitungsmaschine gelten somit auch für die Bodenbearbeitungsvorrichtung, das Verfahren und/oder für die landwirtschaftliche Bodenbearbeitungsmaschine und sind in beliebiger Weise und frei innerhalb des Schutzbereichs der Ansprüche miteinander kombinierbar.

Die Erfindung betrifft zur Lösung der Aufgaben eine Bodenbearbeitungsvorrichtung, vorzugsweise zur Bodenbearbeitung in einer Reihe einer Reihenkultur. Die Bodenbearbeitungsvorrichtung ist zur Montage an einer Trägerkonstruktion (z.B. Rahmenkonstruktion, Fahrzeugchassis oder dergl.) und zur Bewegung mit einer Fahrgeschwindigkeit entlang einer Reihe einer Reihenkultur auf einer landwirtschaftlichen Fläche eingerichtet.

Um eine Bodenbearbeitung in einer Reihe einer Reihenkultur mit einfachen Mitteln wesentlich zu verbessern ist erfindungsgemäß vorgesehen, dass die Bodenbearbeitungsvorrichtung Werkzeuge aufweist, welche sternförmig entlang einer Kurvenbahn mit veränderbarer Bewegungsgeschwindigkeit unter Durchführung von durch die Kurvenbahn hervorgerufenen Schwenkbewegungen bewegt werden.

Die Erfindung macht sich die Erkenntnis zu Nutze, dass durch eine sternförmige Anordnung und eine Bewegung der Werkzeuge entlang einer Kurvenbahn gezielte Schwenkbewegungen der Werkzeuge erzeugt werden können.

Infolge der erfindungsgemäßen Maßnahmen wird somit erreicht, dass aufgrund der Kurvenbahn die Werkzeuge gegenüber der Reihe eine Linearbewegung ausführen und nicht wie aus dem Stand der Technik bekannt eine Rotationsbewegung, wodurch eine Bodenbearbeitung in einer Reihe einer Reihenkultur wesentlich verbessert wird.

Im Kontext der Erfindung umfasst die Definition einer Bodenbearbeitung in einer Reihe einer Reihenkultur insbesondere eine mechanische Unkrautbekämpfung. Zudem umfasst die Definition in einer Reihe einer Reihenkultur insbesondere eine Bodenbearbeitung zwischen zwei Pflanzen und/oder Saatkörnern einer Reihenkultur (z.B. Mais, Zuckerrüben, Getreide (z.B. Weizen) und/oder dergl.). Wobei die Reihenkultur insbesondere Reihen mit Abständen zueinander von bspw. 12,5cm oder 15cm oder 45cm oder 50cm oder 75cm oder dergl. aufweist.

Es sei zudem darauf hingewiesen, dass gemäß der vorliegenden Beschreibung unter die Definition von Pflanzen auch Saatkörner, welche noch nicht aufgelaufen sind subsumierbar sind und dementsprechend im Kontext der Erfindung auch Saatkörner von Begriff der Pflanzen mit umfasst sind.

Um zu verhindern das Pflanzen und/oder Saatkörner einer Reihe der Reihenkultur durch eine falsche Bewegungsgeschwindigkeit oder Fahrgeschwindigkeit beschädigt werden, kann eine Ausführungsvariante der Erfindung vorsehen, dass zur Veränderung der Bewegungsgeschwindigkeit, die Bewegungsgeschwindigkeit steuer- und/oder regelbar ist, vorzugsweise mittels einer Antriebseinrichtung steuer- und/oder regelbar ist, wobei ein steuern- und/oder regeln der Bewegungsgeschwindigkeit anhand einer Fahrgeschwindigkeit derartig erfolgt, dass eine Differenz der Fahrgeschwindigkeit und einer durch die Bewegungsgeschwindigkeit hervorgerufenen Relativgeschwindigkeit der Werkzeuge in Fahrtrichtung im Wesentlichen null ist.

Alternativ oder ergänzend hierzu ist es möglich, dass die Fahrgeschwindigkeit steuer- und/oder regelbar ist, vorzugsweise mittels eines Fahrantriebes steuer- und/oder regelbar ist, wobei ein steuern- und/oder regeln der Fahrgeschwindigkeit anhand der Bewegungsgeschwindigkeit derartig erfolgt, dass eine Differenz der Fahrgeschwindigkeit und einer durch die Bewegungsgeschwindigkeit hervorgerufenen Relativgeschwindigkeit der Werkzeuge in Fahrtrichtung im Wesentlichen null ist.

Die Antriebseinrichtung kann hierbei bspw. zumindest einen Motor, einen Antrieb oder dergl. umfassen. Ebenso kann der Fahrantrieb bspw. einen Motor, Antrieb oder dergl. umfassen. Wobei die Antriebseinrichtung und/oder der Fahrantrieb zudem mit einer Steuereinrichtung gekoppelt sein können oder von einer Steuereinrichtung umfasst sein können. Wobei der Motor und/oder der Antrieb oder dergl. elektrisch und/oder hydraulisch und/oder pneumatisch betreibbar sein können.

Die Erfassung der Fahrgeschwindigkeit und/oder der Bewegungsgeschwindigkeit kann in an sich bekannter weise mittels Geschwindigkeitssensoren, Beschleunigungssensoren und/oder dergl. erfolgen. Anhand einer Differenz der somit erfassten Fahrgeschwindigkeit und/oder Bewegungsgeschwindigkeit können die Antriebseinrichtung und/oder Fahrantrieb entsprechend mittels der Steuereinrichtung steuer- und/oder regelbar sein. Wobei die Steuereinrichtung auch eingerichtet sein kann, mit der Antriebseinrichtung und/oder dem Fahrantrieb gekoppelte Übersetzungsgetriebe entsprechend mit zu berücksichtigen.

Eine bevorzugte Ausführungsvariante der Erfindung kann vorsehen, dass die Werkzeuge in aufrechter Weise (z.B. Senkrecht zur Fahrtrichtung und/oder zur Reihe einer Reihenkultur) an einem, vorzugsweise verformbaren (das heißt beweglichen, elastischen und/oder dergl.), Endlosmontageelement (z.B. Kette, Keilriemen und/oder dergl.) angeordnet sind.

Wobei das Endlosmontageelement auch durch eine Verbindung aus einem Element erzeugt werden kann.

Um eine an Pflanzen und/oder Saatkörner einer Reihe angepasste Bodenbearbeitung zu erreichen ist es gemäß einer Weiterbildung der Erfindung möglich, dass der horizontale Abstand von zwei Werkzeugen zueinander im Wesentlichen identisch ist zu einem Abstand von zwei Pflanzen und/oder Saatkörner einer Reihe und/oder vorzugsweise mindestens 5cm oder mindestens 10cm und maximal 25cm oder maximal 30cm beträgt. Wobei es gemäß einer alternativen oder zusätzlichen Ausführungsvariante hierzu möglich ist, dass der horizontale Abstand von zwei Werkzeugen auf dem Endlosmontageelement veränderbar ist.

Mittels der Kurvenbahn ist es zweckmäßig möglich, dass die Werkzeuge (z.B. mittels des Endlosmontageband) linear gegenüber den Reihen einer Reihenkultur bewegt werden, um dies sicher zu stellen kann vorgesehen sein, dass die Kurvenbahn in Fahrtrichtung eine Längserstreckung aufweist welche größer oder gleich ist zu einem Horizontalen Abstand von zwei Werkzeugen zueinander. Alternativ oder zusätzlich hierzu kann vorgesehen sein, dass die Kurvenbahn eine derartige aufrechte Ausrichtung aufweist, dass zwei Werkzeuge übereinander entlang der Kurvenbahn bewegbar sind.

Es ist möglich, dass die Längserstreckung im Wesentlichen parallel zur Fahrtrichtung und/oder zu einer Reihe einer Reihenkultur ist.

Gemäß einer bevorzugten Ausführungsvariante kann vorgesehen sein, dass die Kurvenbahn dazu eingerichtet ist, eine durch Schwenkbewegungen hervorgerufene Größe der Auslenkung der Werkzeuge quer zur Fahrrichtung zu definieren und/oder einen intervallweisen Wechsel der Positionen der Werkzeuge zu definieren. Insbesondere einen Wechsel zwischen einer Position links und/oder rechts neben einer Reihe und einer Position der Werkzeuge im Wesentlichen auf der Reihe und/oder einer Position links neben der Reihe und einer Position der Werkzeuge im Wesentlichen auf der Reihe und einer Position rechts neben der Reihe.

Die durch die Kurvenbahn hervorgerufenen Schwenkbewegungen der Werkzeuge erfolgen in einem Winkel zur Fahrtrichtung und/oder zur Reihe der Reihenkultur, der mindestens 45° oder mindestens 60° oder mindestens 75° beträgt.

Wobei es erfindungsgemäß möglich ist, dass durch eine Relativgeschwindigkeit von im Wesentlichen null die durch die Kurvenbahn hervorgerufenen Schwenkbewegungen der Werkzeuge, in einem Winkel zur Fahrtrichtung und/oder zur Reihe der Reihenkultur erfolgen, der mindestens 45° oder mindestens 60° oder mindestens 75° beträgt und/oder dass die Schwenkbewegungen der Werkzeuge vorzugsweise im Wesentlichen senkrecht zur Fahrtrichtung und/oder zur Reihe der Reihenkultur erfolgen. Das heißt die Bewegungsbahn der Werkzeuge erfolgen in einem Winkel zur Fahrtrichtung und/oder zur Reihe der Reihenkultur.

Zur Sicherstellung, dass bei Beginn der Bodenbearbeitung keine Pflanzen und/oder Saatkörner mittels der Werkzeuge beschädigt werden, ist es möglich, dass die Werkzeuge in einer, keine Bewegungen ausführenden, Grundstellung eine nicht mittige Position gegenüber der Kurvenbahn aufweisen, insbesondere keine Anordnung (z.B. Lage) im Bereich der Reihe der Reihenkultur aufweisen.

Gemäß einer anderen Ausführungsvariante der Erfindung kann vorgesehen sein, dass die Bodenbearbeitungsvorrichtung zumindest zwei hintereinander angeordnete Werkzeuge aufweist und die Kurvenbahn dazu eingerichtet ist, derartige Schwenkbewegungen bei den Werkzeugen hervorzurufen, dass zumindest ein Werkzeug eine Position links und/oder rechts neben einer Reihe aufweist und zumindest ein Werkzeug eine Position im Wesentlichen auf der Reihe der Reihenkultur aufweist.

Die Werkzeuge können bspw. durch Zinken, Schare und/oder dergl. gebildet sein, welche vorzugsweise zumindest quer zur Fahrtrichtung orientierte Schneiden aufweisen können.

Es sei darauf hingewiesen das sternförmig im Kontext der Erfindung nicht zwingend eine Anordnung der Werkzeuge am Umfang eines Kreises verlangt, sondern dass von der Definition auch von Kreisen abweichende Formen, Konturen oder dergl. umfasst sind, bspw. Ovale, Ellipsenförmige oder dergl., insbesondere umfasst sind zumindest abschnittweise bogenförmige Formen, Konturen oder dergl. Insbesondere ist es möglich, dass die Grundform der sternförmigen Anordnung durch eine Form gebildet ist, die abschnittweise bogenförmig und abschnittweise eben ist. Wobei insbesondere das Endlosmontageband entlang dieser Grundform geführt werden kann und somit zweckmäßig ebenfalls diese Kontur, Form oder dergl. aufweisen kann.

Die Fahrtrichtung kann insbesondere durch eine Bewegungsrichtung der Bodenbearbeitungsvorrichtung, respektive der Bodenbearbeitungsmaschine definiert sein und bspw. einer Vorwärtsrichtung entsprechen.

Die Erfindung betrifft zur Lösung der Aufgaben zudem ein Verfahren zur Bodenbearbeitung in einer Reihe einer Reihenkultur.

Das Verfahren ist gekennzeichnet durch ein Bereitstellen einer Bodenbodenbearbeitungsvorrichtung oder ein Bereitstellen mehrerer Bodenbearbeitungsvorrichtungen, mit Werkzeugen, welche Werkzeuge sternförmig entlang einer Kurvenbahn mit einer Bewegungsgeschwindigkeit unter Durchführung von durch die Kurvenbahn hervorgerufenen Schwenkbewegungen bewegt werden.

Das Verfahren umfasst zudem, ein Bewegen der einen Bodenbearbeitungsvorrichtung oder der mehreren Bodenbearbeitungsvorrichtungen entlang einer Reihe einer Reihenkultur mittels einer Fahrgeschwindigkeit.

Zudem umfasst das Verfahren ein Steuern- und/oder Regeln der Bewegungsgeschwindigkeit und/oder der Fahrgeschwindigkeit derartig, dass eine Differenz der Fahrgeschwindigkeit und einer durch die Bewegungsgeschwindigkeit hervorgerufenen Relativgeschwindigkeit der Werkzeuge in Fahrtrichtung im Wesentlichen null ist.

Eine Weiterbildung der Erfindung kann zudem gekennzeichnet sein durch, einmaliges und/oder kontinuierliches Erfassen einer Position zumindest einer Pflanze und/oder eines Saatkorn einer Reihe mittels einer Erfassungseinrichtung, und einer Bestimmung der Position der Pflanze und/oder des Saatkorn gegenüber zumindest einem Werkzeug, und einer Anpassung der Position des Werkzeugs gegenüber der Pflanze auf eine Sollposition.

Ein einmaliges Erfassen kann gekennzeichnet sein durch ein Erfassen einer Pflanze oder eines Saatkorns, bspw. bei Beginn der Bodenbearbeitung in einer Reihe. Wobei dies mitunter ausreichend sein kann, insofern die Pflanzen und/oder Körner einen im wesentlichen gleichen Abstand zueinander aufweisen, das heißt insbesondere ein definiertes Raster zueinander aufweisen (bspw. wenn diese mittels Einzelkornsaat gesät wurden).

Ein Kontinuierliches Erfassen kann gekennzeichnet sein durch ein Erfassen jeder Pflanze und/oder jedes Saatkorn. Ein kontinuierliches Erfassen kann alternativ oder ergänzend auch gekennzeichnet sein durch ein periodisches und/oder intervallweises Erfassen von Pflanzen und/oder Saatkörnen, welche Periode und/oder welches Intervall bspw. durch Abstände, Zeiten, Positionen und/oder dergl. definiert sein kann.

Die Erfassungseinrichtung kann bspw. durch einen oder mehrere Radarsensor(en), Lasersensor(en) und/oder dergl. gebildet sein. Die Erfassungseinrichtung kann alternativ oder zusätzlich auch eine oder mehrere Kamera(s) aufweisen.

Die Erfassungseinrichtung kann alternativ oder ergänzend auch mit einem Positionsbestimmungssystem signalverbunden und/oder signalverbindbar sein und/oder durch ein Positionsbestimmungssystem gebildet sein. Das Positionsbestimmungssystem ist insbesondere ein Satelliten gestütztes Positionsbestimmungssystem, wie bspw. ein GPS-System, RTK-System oder dergl. Wobei das Positionsbestimmungssystem eingerichtet sein kann, Positionen von Pflanzen und/oder Saatkörner an die Erfassungseinrichtung zu übertragen, wobei die Positionen bspw. insbesondere bei einem vorhergehenden Arbeitsprozess (z.B. Aussaat) dokumentiert wurden.

Es ist alternativ oder ergänzend möglich, dass die Erfassungseinrichtung (z.B. das Positionsbestimmungssystem) eingerichtet ist, um die Bodenbearbeitungsvorrichtung, respektive die landwirtschaftliche Bodenbearbeitungsmaschine entlang einer Reihe einer Reihenkultur auf einer landwirtschaftlichen Fläche zu bewegen, bspw. entsprechende, ein Lenkung der landwirtschaftlichen Bodenbearbeitungsmaschine mittelbar und/oder unmittelbar beeinflussende Positionssignale bereitzustellen.

Eine Bestimmung der Position der Pflanze und/oder des Saatkorns gegenüber einem Werkzeug kann bspw. mittels der Erfassungseinrichtung erfolgen oder mittels einer Steuereinrichtung erfolgen. Wobei die Bestimmung unter Berücksichtigung eines definierten und/oder definierbaren Abstandswertes zwischen der Erfassungseinrichtung und dem Werkzeug erfolgen kann. Das heißt, in dem ein Abstand zwischen der Erfassungseinrichtung und dem Werkzeug bekannt ist sowie ein Abstand zwischen der Erfassungseinrichtung und der Pflanze und/oder dem Saatkorn erfasst wird, kann eine exakte Position der Werkzeuge gegenüber der Pflanze und/oder dem Saatkorn bestimmt werden. Wobei es auch denkbar ist, dass ein Abstand zwischen der Erfassungseinrichtung und der Pflanzen und/oder dem Saatkorn dadurch bestimmt wird, in dem ein Abstand definiert ist ab welchem die Erfassungseinrichtung ein Signal einer Position einer Pflanze und/oder einem Saatkorn ausgibt.

Eine Anpassung der Position der Werkzeuge gegenüber der Pflanze und/oder einem Saatkorn kann auf verschiedenste Art und Weise erfolgen, zweckmäßig insbesondere durch eine Erhöhung oder Verringerung der Bewegungsgeschwindigkeit und/oder eine Drehrichtungsumkehr der Bewegung der Werkzeuge entlang der Kurvenbahn und/oder eine Erhöhung oder Verringerung der Fahrgeschwindigkeit.

Um sicherzustellen, dass während der Anpassung der Position der Werkzeuge gegenüber den Pflanzen und/oder den Saatkörner diese nicht beschädigt werden kann gemäß einer Weiterbildung der Erfindung vorgesehen sein, dass eine Anpassung der Position der Werkzeuge nur erfolgt, wenn keines der Werkzeuge eine mittige Position gegenüber der Kurvenbahn aufweist und/oder wenn keines der Werkzeuge eine Position im Bereich der Reihe der Reihenkultur aufweist.

Eine bevorzugte Weiterbildung des Verfahrens kann vorsehen, dass die mehreren Bodenbearbeitungsvorrichtungen eine zumindest weitgehend identische Bewegungsgeschwindigkeit aufweisen und/oder unterschiedliche Bewegungsgeschwindigkeiten aufweisen und/oder eine unterschiedliche oder identische Sollposition (bspw. ein Werkzeug vorne angrenzend an eine Pflanze und ein Werkzeug hinten angrenzend an eine Pflanze) aufweisen und/oder derartig entlang der Kurvenbahn bewegt werden, dass zumindest ein Zwischenraum zwischen zwei Pflanzen und/oder Saatkörner einer Reihe zumindest doppelt bearbeitet wird.

Wobei nebeneinander angeordnete Bodenbearbeitungsvorrichtungen unterschiedliche Bewegungsgeschwindigkeiten aufweisen können, um somit auch bei Kurvenfahrten optimale Ergebnisse zu erreichen.

Es ist möglich, dass die Bewegungsgeschwindigkeit an entsprechende Fahrdynamische (bspw. Veränderungen der Fahrgeschwindigkeit und/oder der Zentrifugalbeschleunigung) Veränderungen angepasst wird.

Es ist möglich, dass die Fahrgeschwindigkeit und/oder die Zentrifugalbeschleunigung mittels eines Sensors erfasst wird und/oder mittels mehrerer Sensoren (z.B. Beschleunigungssensoren, Drehratensensoren und/oder dergl.) erfasst wird. Wobei die Sensoren auch derartig eingerichtet und bspw. mittels einer Steuereinrichtung gekoppelt sein können, um unterschiedliche Fahrgeschwindigkeiten an unterschiedlichen Positionen der Bodenbearbeitungsmaschine bei Kurvenfahrten erfassen zu können, und um somit Zentrifugalbeschleunigungen erfassen zu können.

Die Erfindung umfasst zur Lösung der Aufgaben zudem eine landwirtschaftliche Bodenbearbeitungsmaschine, vorzugsweise zur Bodenbearbeitung in einer Reihe einer Reihenkultur, insbesondere zur mechanischen Unkrautbekämpfung in einer Reihe einer Reihenkultur.

Die Bodenbearbeitungsmaschine ist eingerichtet, mit einer Fahrgeschwindigkeit entlang einer Reihe einer Reihenkultur auf einer landwirtschaftlichen Fläche bewegt zu werden.

Die Bodenbearbeitungsmaschine weist zudem eine Trägerkonstruktion auf, wobei an der Trägerkonstruktion zumindest zwei Bodenbearbeitungsvorrichtungen nebeneinander angebracht sind und/oder zwei Bodenbearbeitungsvorrichtungen nebeneinander und zumindest zwei Bodenbearbeitungsvorrichtungen hintereinander angebracht sind.

Die erfindungsgemäße Bodenbearbeitungsmaschine zeichnet sich dadurch aus, dass die Bodenbearbeitungsvorrichtungen wie hierin beschrieben ausgeführt sind, insbesondere dadurch, dass die Bodenbearbeitungsvorrichtungen nach zumindest einem der Ansprüche 1 bis 11 ausgeführt sind.

Alternativ oder zusätzlich zeichnet sich die erfindungsgemäße Bodenbearbeitungsmaschine dadurch aus, dass diese eingerichtet ist, ein Verfahren wie hierin beschrieben auszuführen, insbesondere dadurch, dass die Bodenbearbeitungsmaschine eingerichtet ist, ein Verfahren nach zumindest einem der Ansprüche 12 bis 16 auszuführen.

Zur Verbesserung der mittels der Bodenbearbeitungsmaschine durchgeführten Bodenbearbeitung, insbesondere zur Bearbeitung der Zwischenräume zwischen zwei Reihen der Reihenkultur ist es gemäß einer Weiterbildung der Erfindung möglich, dass zwischen zwei, quer zur Fahrtrichtung, nebeneinander angeordneten Bodenbearbeitungsvorrichtungen Lockerungselemente angeordnet sind, wobei die Lockerungselemente in dessen Höhenlage gegenüber den Bodenbearbeitungsvorrichtungen veränderbar gelagert sind und/oder wobei die Bodenbearbeitungsvorrichtung in dessen Höhenlage gegenüber den Lockerungselementen und/oder der Trägerkonstruktion gelagert sind.

Es ist möglich, dass die Bodenbearbeitungsvorrichtungen mittels einer Verstelleinrichtung (z.B. Parallellogramm, Linearelement und/oder dergl.) höhenverstellbar gegenüber der Trägerkonstruktion gelagert sind.

Es ist möglich, dass die zumindest zwei nebeneinander angebrachten und/oder die zumindest zwei hintereinander angebrachten Bodenbearbeitungsvorrichtungen unterschiedliche Höhenlagen zueinander aufweisen können.

Eine optimale Höhenlage der Bodenbearbeitungseinrichtung kann gemäß einer Ausführungsvariante dadurch erreicht werden, dass die Höhenlage der Bodenbearbeitungsvorrichtung gegenüber der Trägerkonstruktion Anhand einer Bewegungsgeschwindigkeit und/oder Anhand einer Fahrgeschwindigkeit und/oder Anhand einer Position der Werkzeuge gegenüber einer Pflanze und/oder einem Saatkorn einer Reihe veränderbar ist.

Gemäß einer Alternativen oder ergänzenden Ausführungsvariante wäre es jedoch auch denkbar, dass die Bewegungsgeschwindigkeit und/oder die Fahrgeschwindigkeit anhand einer Höhenlage der Bodenbearbeitungsvorrichtung gegenüber der Trägerkonstruktion veränderbar ist.

Zur Erfassung der Höhenlage der Bodenbearbeitungsvorrichtung ist es möglich, dass eine Sensoreinrichtung vorgesehen ist, welche Sensoreinrichtung dazu eingerichtet ist, eine Höhenlage der Bodenbearbeitungsvorrichtung gegenüber der Trägerkonstruktion und/oder gegenüber der landwirtschaftlichen Fläche zu erfassen. Wobei die Sensoreinrichtung bspw. einen oder mehrere zwischen der Trägerkonstruktion und/oder Bodenbearbeitungsvorrichtung angeordnete Winkelsensoren umfassen kann und/oder an der Bodenbearbeitungsvorrichtung angeordnete Abstandssensoren (z.B. Ultraschallsensoren) umfassen kann. Auch Kraftsensoren, welche eine auf die Werkzeuge und/oder die Bodenbearbeitungsvorrichtung wirkende Kraft ermitteln wären ergänzend oder alternativ denkbar.

Die Bodenbearbeitungsmaschine kann als eine selbstfahrende oder als eine mittels eines Zugfahrzeug (z.B. Traktor) gezogene oder als eine an einem Zugfahrzeug angebaute (z.B. mittels Dreipunkt-Anhängung) Bodenbearbeitungsmaschine ausgeführt sein.

Gemäß einer bevorzugten Ausführungsform kann vorgesehen sein, dass die Bodenbearbeitungsmaschine als selbstfahrende Bodenbearbeitungsmaschine ausgeführt ist, vorzugsweise als autonome (z.B. teilautonom und/oder vollautonom) selbstfahrende Bodenbearbeitungsmaschine ausgeführt ist.

Die Steuereinrichtung weist bspw. eine Rechnereinheit, einen Bordcomputer und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Wobei die Steuereinrichtung auch ein entsprechendes Steuer- und/oder Regelungsprogramm aufweisen kann.

Im Kontext der Erfindung umfasst der Begriff der Steuereinrichtung, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen oder Erfassungseinrichtungen integrierte Steuereinrichtungen. Ebenso sei darauf hingewiesen, dass die Signale und/oder Daten der Sensoren / Messeinrichtungen / Erfassungseinrichtungen und/oder dergl. jeweils als Rückkoppelung für eine Steuer- und/oder Regelgröße herangezogen werden können.

Es sei noch darauf hingewiesen, dass die Begriffe "Steuern" und "Regeln" und "Steuereinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1A: eine Perspektivansicht einer Ausführungsvariante einer landwirtschaftlichen Bodenbearbeitungsmaschine mit einer Vielzahl von Bodenbearbeitungsvorrichtungen,
- Figur 1B: eine Seitenansicht einer Bodenbearbeitungsmaschine gemäß der Figur 1A,
- Figur 2A: eine Perspektivansicht von zwei hintereinander angeordneten Ausführungsvarianten einer erfindungsgemäßen Bodenbearbeitungsvorrichtung,
- Figur 2B: eine stark vereinfachte Draufsicht von zwei hintereinander angeordneten Bodenbearbeitungsvorrichtungen gemäß der Figur 2A,
- Figur 3: eine Seitenansicht eines Ausführungsbeispiels einer selbstfahrenden Bodenbearbeitungsmaschine

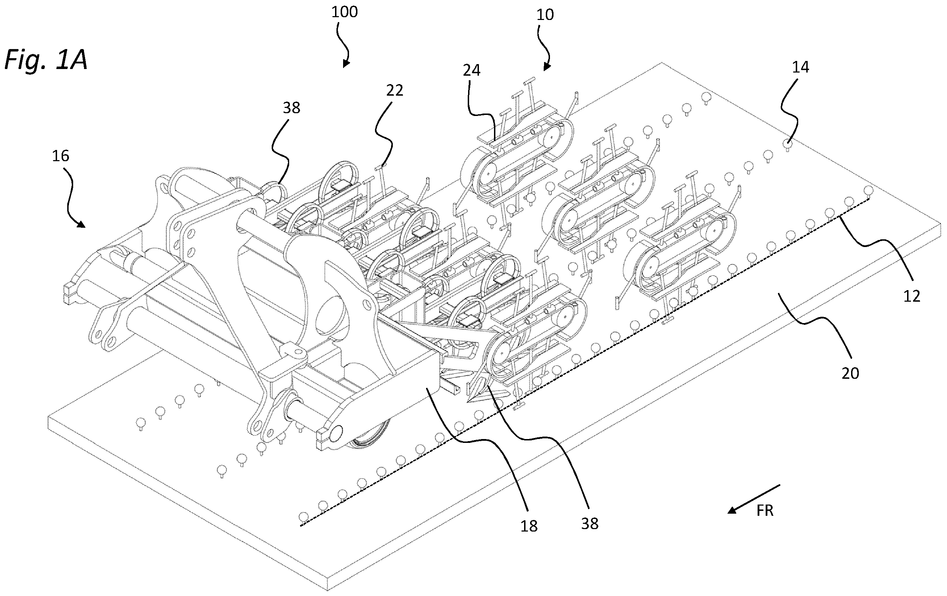

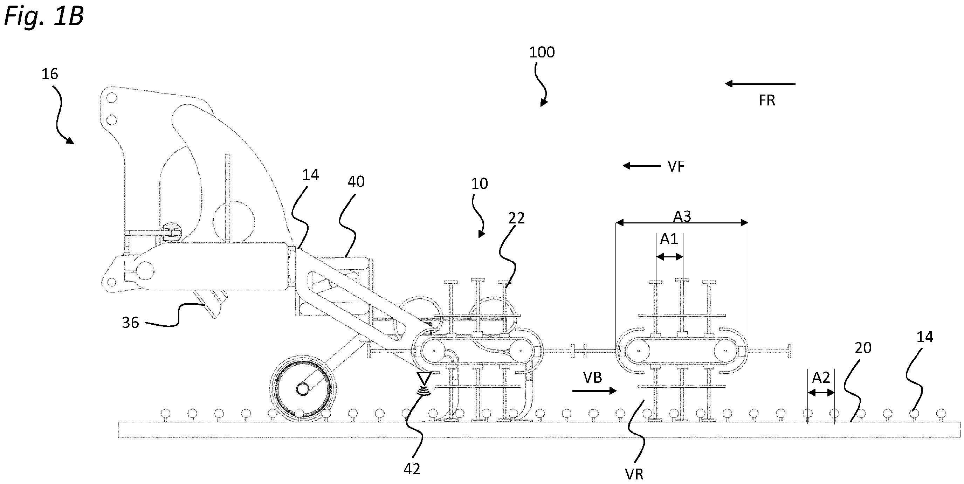

Die in den Figuren 1 bis 3 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie die erfindungsgemäße Bodenbearbeitungsvorrichtung, das erfindungsgemäße Verfahren und die erfindungsgemäße landwirtschaftliche Bodenbearbeitungsmaschine ausgestaltet und ausgeführt sein können und stellen keine abschließende Begrenzung dar.

Die Figuren 1A bis 3 zeigen unterschiedliche Ansichten von Ausführungsbeispielen von Bodenbearbeitungsvorrichtungen 10 sowie einer landwirtschaftlichen Bodenbearbeitungsmaschine 100, die unter gemeinsamer Bezugnahme auf die Figuren 1A bis 3 beschrieben werden.

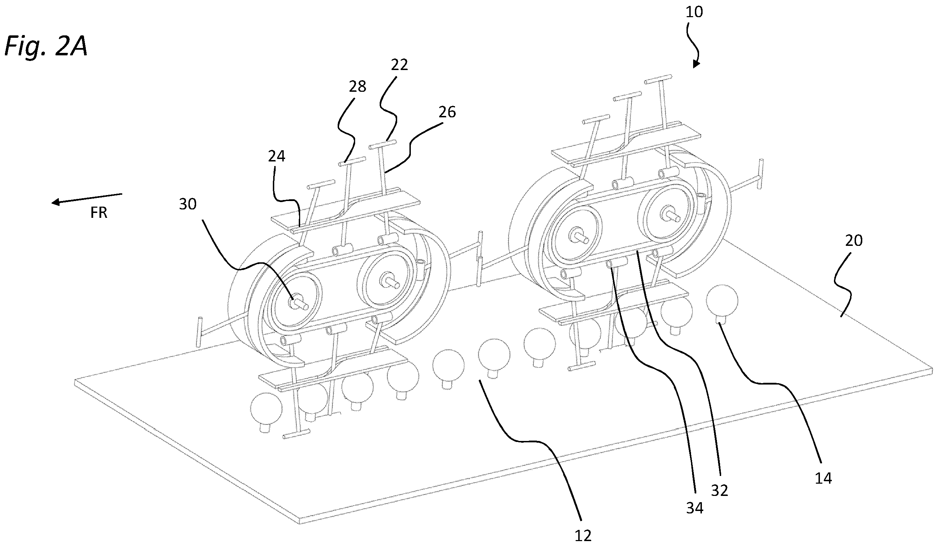

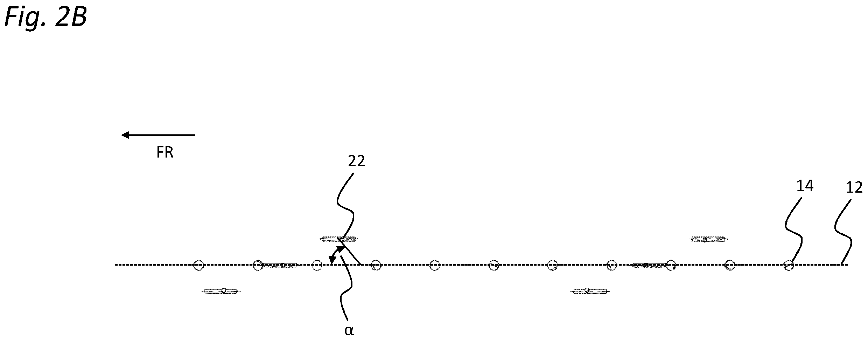

Die Figuren zeigen eine Ausführungsvariante einer landwirtschaftlichen Bodenbearbeitungsmaschine 100 mit daran angeordneten Bodenbearbeitungsvorrichtungen 10. Diese dienen jeweils zur Bodenbearbeitung in einer Reihe 12 einer Reihenkultur, insbesondere zur Bodenbearbeitung zwischen zwei Pflanzen 14, respektive Saatkörner 14, in einer Reihe 12 einer, insbesondere landwirtschaftlichen Reihenkultur, wie bspw. Mais, Zuckerrüben und/oder dergl. Zur Verdeutlichung einer derartigen schematischen bzw. virtuellen Reihe 12 ist in den Figuren 1A und 2B jeweils eine unterbrochene Linie eingezeichnet.

Die Bodenbearbeitungsmaschine 100 gemäß der Figuren 1 ist als eine, an ein Zugfahrzeug (hier nicht dargestellt) anbaubare Maschine ausgeführt und umfasst hierfür eine Dreipunkt-Anhängung 16. Wobei dies insbesondere bedeutet, dass mittels des Zugfahrzeug eine Fahrgeschwindigkeit VF der Bodenbearbeitungsvorrichtungen 10, respektive der Bodenbearbeitungsmaschine 100 erzeugt wird, mit welcher Fahrgeschwindigkeit VF die Bodenbearbeitungsvorrichtungen 10, respektive die Bodenbearbeitungsmaschine 100 entlang einer Reihe 12 einer Reihenkultur auf einer landwirtschaftlichen Fläche 20 bewegt wird.

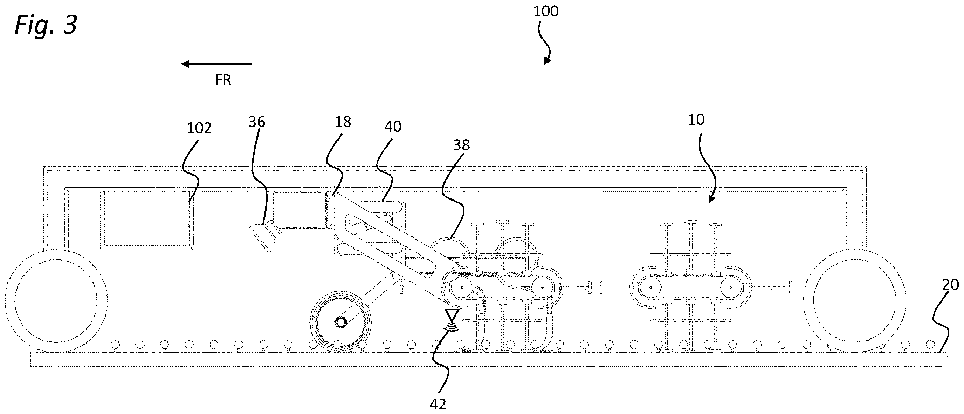

Die Bodenbearbeitungsmaschine 100 gemäß der Figur 3 ist demgegenüber als eine selbstfahrende Bodenbearbeitungsmaschine 100 ausgeführt, vorzugsweise als autonome (z.B. teilautonom und/oder vollautonom) selbstfahrende Bodenbearbeitungsmaschine 100, das heißt, dass diese einen eigenen Fahrantrieb 102 (bspw. Motor) aufweist. Wobei somit mittels des Fahrantrieb 102 eine Fahrgeschwindigkeit VF der Bodenbearbeitungsvorrichtungen 10, respektive der Bodenbearbeitungsmaschine 100 erzeugt wird, welche Fahrgeschwindigkeit VF zudem steuer- und/oder regelbar sein kann.

Die Bodenbearbeitungsmaschinen 100 gemäß der Figuren 1 und 3 sind jeweils eingerichtet, ein Verfahren zur Bodenbearbeitung in einer Reihe 12 einer Reihenkultur wie hierin beschrieben auszuführen. Insbesondere mittels einer Bodenbearbeitungsvorrichtung 10 wie hierin beschrieben auszuführen.

Die Bodenbearbeitungsvorrichtung 10 ist gemäß der Ausführungsbeispiele an einer, durch eine Rahmenkonstruktion (Figur 1) oder ein Fahrzeugchassis (Figur 3) gebildeten, Trägerkonstruktion 18 angebaut. Wobei die Bodenbearbeitungsvorrichtung 10 somit zur Bewegung mit einer Fahrgeschwindigkeit VF entlang einer Reihe 12 einer Reihenkultur einer landwirtschaftlichen Fläche 20 eingerichtet ist.

Die Bodenbearbeitungsvorrichtungen 10 weisen jeweils Werkzeuge 22 (hier stark vereinfacht dargestellt) auf, welche sternförmig entlang einer Kurvenbahn 24 (z.B. Führungskulisse oder dergl.) mit veränderbarer Bewegungsgeschwindigkeit VB unter Durchführung von durch die Kurvenbahn 24 hervorgerufenen Schwenkbewegungen bewegt werden. Wobei die Grundform der sternförmigen Anordnung gemäß der Ausführungsbeispiele durch eine Form gebildet ist, die abschnittweise bogenförmig und abschnittweise eben ist.

Die Werkzeuge 22 gemäß der Ausführungsbeispiele sind durch einen Steher 26 und einem an diesem angeordnetem Schar 28 in Form eines Meißels gebildet, welcher Meißel dazu eingerichtet ist, zwischen zwei Pflanzen 14 befindliches Unkraut und/oder Boden zu bewegen oder zu beseitigen. Die Werkzeuge 22 könnten auch anders aufgebaut und durch andere Zinken, Schare und/oder dergl. gebildet sein.

Wie insbesondere aus der Figur 2B hervorgeht, ist es durch eine sternförmige und lineare Bewegung der Werkzeuge 22 entlang der Kurvenbahn 24 möglich, dass gezielte Schwenkbewegungen der Werkzeuge 22 erzeugt werden können und somit in einer Reihe 12 einer Reihenkultur eine Bodenbearbeitung durchgeführt werden kann ohne hierbei Pflanzen 14 und/oder Saatkörner 14 zu beschädigen und/oder Saatkörner 14 bspw. aus der Reihe 12 zu entfernen.

Es ist möglich, dass die Bewegungsgeschwindigkeit VB steuer- und/oder regelbar ist. Wobei hierfür die Bodenbearbeitungsvorrichtung 10 jeweils eine oder zwei Antriebsscheiben 30 aufweist, welche bspw. mittels einer Antriebseinrichtung (z.B. Motor - hier nicht dargestellt) steuer- und/oder regelbar ist. Wobei die Antriebseinrichtung bspw. mit zumindest einer Antriebsscheibe 30 gekoppelt und/oder wirktechnisch verbunden ist.

Das Steuern und/oder Regeln der Bewegungsgeschwindigkeit VB erfolgt anhand einer Fahrgeschwindigkeit VF derartig, dass eine Differenz der Fahrgeschwindigkeit VF und einer durch die Bewegungsgeschwindigkeit VB hervorgerufene Relativgeschwindigkeit VR der Werkezeuge 22 in Fahrtrichtung FR im Wesentlichen null ist, vergl. hierzu Figur 1B.

Insbesondere bei einer Ausführungsvariante einer Maschine gemäß der Figur 3 ist es alternativ oder ergänzend auch möglich, dass die Fahrgeschwindigkeit VF steuer- und/oder regelbar ist, vorzugsweise mittels des Fahrantrieb 102 steuer- und/oder regelbar ist. Wobei auch in diesem Fall ein steuern- und/oder regeln der Fahrgeschwindigkeit VF anhand der Bewegungsgeschwindigkeit VB derartig erfolgt, dass eine Differenz der Fahrgeschwindigkeit VF und einer durch die Bewegungsgeschwindigkeit VF hervorgerufene Relativgeschwindigkeit VR der Werkzeuge 22 in Fahrtrichtung FR im Wesentlichen null ist.

Die Werkzeuge 22 (insbesondere die Steher 26) sind in aufrechter Weise (gemäß der Ausführungsbeispiele senkrecht zur Fahrtrichtung FR und zur Reihe 12 der Reihenkultur) an einem, vorzugsweise verformbaren, Endlosmontageelement 32 (z.B. Keilriemen) angeordnet. Zweckmäßig quer zur Fahrtrichtung FR schwenkbar am Endlosmontageelement 32 angeordnet, z.B. mittels einer Schwenklagerung 34 oder dergl.

Die Bodenbearbeitungsvorrichtungen 10 sind derartig ausgeführt, dass der horizontale Abstand A1 von zwei Werkzeugen zueinander im Wesentlichen identisch ist zu einem Abstand A2 von zwei Pflanzen 14 und/oder Saatkörnern14 einer Reihe 12 einer Reihenkultur. Wobei der horizontale Abstand A1 bspw. mindestens 5cm oder mindestens 10cm und maximal 25cm oder maximal 30cm beträgt.

Es wäre hierbei auch denkbar, dass der horizontale Abstand am Endlosmontageband 32 veränderbar ist und/oder dass verschiedene Endlosmontagebänder 32 mit gleichen oder verschiedenen Werkzeugen 22 eingesetzt werden können. Auch wäre es denkbar das verschiedene Werkzeuge 22 am Endlosmontageband 32 montierbar sind.

Wobei gemäß der Ausführungsbeispiele auch eine Anordnung von zwei Bodenbearbeitungsvorrichtungen 10 hintereinander an einer Bodenbearbeitungsmaschine 100 entsprechend an den Abstand von Pflanzen 14 in einer Reihe 12 angepasst ist.

Die Kurvenbahn 24 ist derartig ausgeführt, dass die Werkzeuge 22 Linear gegenüber den Reihen 12 der Reihenkultur bewegt werden, wobei hierfür die Kurvenbahn 24 in Fahrtrichtung FR eine Längserstreckung A3 ausweist welche größer (oder gleich) ist zu einem horizontalen Abstand A1 von zwei Werkzeugen 22 zueinander. Wobei die Längserstreckung A3 im Wesentlichen parallel zur Fahrtrichtung FR und/oder zur Reihe 12 der Reihenkultur ist.

Des Weiteren ist die Kurvenbahn 24 gemäß der Ausführungsbeispiele derartig ausgeführt, dass diese eine aufrechte Ausrichtung aufweist, zwar derartig, dass zwei Werkzeuge 22 übereinander entlang der Kurvenbahn 24 bewegbar sind.

Die Kurvenbahn 24 ist eingerichtet eine durch Schwenkbewegungen hervorgerufen Größe der Auslenkung der Werkzeuge 22 quer zur Fahrtrichtung FR zu definieren (siehe insbesondere Figur 1B). Zudem ist die Kurvenbahn 24 dazu eingerichtet, einen intervallweisen Wechsel der Positionen der Werkzeuge 22 zu definieren. Insbesondere einen Wechsel zwischen einer Position links und/oder rechts neben einer Reihe 12 und einer Position der Werkzeuge 22 im Wesentlichen auf der Reihe 12 und/oder einer Position links neben der Reihe 12 und einer Position der Werkzeuge 22 im Wesentlichen auf der Reihe 12 und einer Position rechts neben der Reihe 12.

Gemäß der Ausführungsbeispiele ist es möglich, dass die Bodenbearbeitungsvorrichtung 10 zumindest zwei hintereinander angeordnete Werkzeuge 22 aufweist und die Kurvenbahn 24 dazu eingerichtet ist, derartige Schwenkbewegungen bei den Werkzeugen 22 hervorzurufen, dass zumindest ein Werkzeug 22 eine Position links und/oder rechts neben einer Reihe 12 aufweist und zumindest ein Werkzeug 22 eine Position im Wesentlichen auf der Reihe 12 aufweist.

Gemäß der Ausführungsbeispiele ist es möglich, dass die Bodenbearbeitungsmaschine 100 zumindest zwei hintereinander angeordnete Bodenbearbeitungsvorrichtungen 10 mit Werkzeugen 22 aufweist, wobei diese derartig angeordnet sind, dass jeder Bereich zwischen zwei Pflanzen und/oder Saatkörnern 14 wenigstens zweimal mittels einer Werkzeuges 22 bearbeitet wird, vorzugsweise in gleiche oder unterschiedliche Richtungen quer zur Fahrrichtung FR bearbeitet wird.

Wobei es erfindungsgemäß möglich ist (vergl. Figur 2B), dass durch eine Relativgeschwindigkeit VR von im Wesentlichen null die durch die Kurvenbahn 24 hervorgerufenen Schwenkbewegungen der Werkzeuge 24, in einem Winkel α zur Fahrtrichtung FR und/oder zur Reihe 12 der Reihenkultur erfolgen, der mindestens 45° oder mindestens 60° oder mindestens 75° beträgt und/oder dass die Schwenkbewegungen der Werkzeuge 22 vorzugsweise im Wesentlichen senkrecht zur Fahrtrichtung FR und/oder zur Reihe der Reihenkultur erfolgen.

Gemäß der Ausführungsbeispiele ist jeweils zumindest ein Werkzeug 22 einer Bodenbearbeitungsvorrichtung 10 im Bereich der Reihe 12 angeordnet, das heißt zweckmäßig mittig zur Kurvenbahn 24 angeordnet, es wäre jedoch auch, insbesondere um ungewollte Beschädigungen von Pflanzen 14 zu vermeiden möglich, dass die Werkzeuge 22 in einer, keine Bewegungen ausführenden, Grundstellung eine nicht mittige Position gegenüber der Kurvenbahn 24 und somit keine Anordnung im Bereich der Reihe 12 aufweisen.

Eine exakte Bodenbearbeitung in einer Reihe 12 einer Reihenkultur kann erreicht werden, indem eine Bewegung der Werkzeuge 22 entlang der Kurvenbahn 24 in Abhängigkeit von Positionen einer Pflanze 14 und/oder eines Saatkorn 14 der Reihe 12 erfolgt. Wobei hierfür ein einmaliges und/oder ein kontinuierliches Erfassen einer Position zumindest einer Pflanze 14 und/oder eines Saatkorns 14 einer Reihe 12 mittels einer Erfassungseinrichtung 36 vorgesehen sein kann.

Zudem kann Anhand der Signale / Daten der Erfassungseinrichtung 36 eine Bestimmung der Position der Pflanze 14 und/oder des Saatkorn 14 gegenüber zumindest einem Werkzeug 22 erfolgen. Wobei hierfür bspw. in der Erfassungseinrichtung 36 und/oder in einer mit der Erfassungseinrichtung 36 gekoppelten Steuereinrichtung ein Abstandswert zwischen der Kurvenbahn 24 und/oder dem Werkzeug 22 und der Erfassungseinrichtung 36 hinterlegt oder eingegeben werden kann und anhand dieses Abstandswert die exakte Position bestimmt werden kann.

Insofern die Werkzeuge 22 nicht die erforderliche Position gegenüber den Pflanzen und/oder Saatkörner 14 aufweisen, kann zudem eine Anpassung der Position der Werkzeuge 22 gegenüber den Pflanzen und/oder den Saatkörnern erfolgen.

Wie aus den Ausführungsbeispielen hervorgeht sind an den Bodenbearbeitungsmaschinen 100, respektive der Trägerkonstruktion 18 jeweils zwei Bodenbearbeitungsvorrichtungen 10 in Fahrtrichtung FR hintereinander angeordnet. Zudem sind zumindest zwei Bodenbearbeitungsvorrichtungen 10 nebeneinander und quer zur Fahrtrichtung FR zumindest zwei Bodenbearbeitungsvorrichtungen 10 hintereinander angeordnet.

Wie aus den Ausführungsbeispielen hervorgeht (siehe Figur 1B oder 2B), ist es möglich dass die Werkzeuge 22 der zwei hintereinander angeordneten Bodenbearbeitungsvorrichtungen 10 unterschiedliche Sollpositionen gegenüber einer Pflanze 14 und/oder oder einem Saatkorn 14 aufweisen um somit den Bereich zwischen zwei Pflanzen 14 und/oder Saatkörnern 14 einer Reihe 12 optimal zu bearbeiten.

Um auch Bereiche zwischen zwei Reihen 12 einer Reihenkultur zu bearbeiten, insbesondere um auch in diesen Bereichen eine mechanische Unkrautbekämpfung durchführen zu können, sind gemäß der Figur 1 und 3 zwischen zwei Bodenbearbeitungsvorrichtungen 10 zudem Lockerungselemente 38 angeordnet. Als Lockerungselemente 38 werden Zinken, Schare, Schneidscheiben oder dergl. eingesetzt.

Wobei die Lockerungselemente 38 insbesondere in deren Höhenlage gegenüber den Bodenbearbeitungsvorrichtungen 10 veränderbar sind. Wobei es auch denkbar wäre, dass die Bodenbearbeitungsvorrichtungen 10 in dessen Höhenlage gegenüber den Lockerungselementen 38 veränderbar sind. Zur Verstellung der Höhenlage der Lockerungselemente 10 ist eine Verstelleinrichtung 40 vorgesehen, bspw. in Form eins Parallelogramms, wobei auch eine Linearführung oder dergl. als Verstelleinrichtung 40 denkbar wäre. Wobei eine derartige Verstelleinrichtung 40 auch zur Verstellung einer Höhenlage der Bodenbearbeitungsvorrichtungen 10 denkbar wäre.

Zur Erfassung der Höhenlage der Bodenbearbeitungsvorrichtung 10 ist es möglich, dass eine Sensoreinrichtung 42 vorgesehen ist, welche Sensoreinrichtung 42 dazu eingerichtet ist, eine Höhenlage der Bodenbearbeitungsvorrichtung 10 gegenüber der Trägerkonstruktion 18 und/oder gegenüber der landwirtschaftlichen Fläche 20 zu erfassen. Wobei die Sensoreinrichtung einen oder mehrere zwischen der Trägerkonstruktion 18 und/oder Bodenbearbeitungsvorrichtung 10 angeordnete Winkelsensoren umfassen kann und/oder an der Bodenbearbeitungsvorrichtung angeordnete Abstandssensoren (z.B. Ultraschallsensoren) umfassen kann. Auch Kraftsensoren, welche eine auf die Werkzeuge und/oder die Bodenbearbeitungsvorrichtung wirkende Kraft ermitteln wären denkbar.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Schutzbereich der Ansprüche zu verlassen. Zusätzlich können viele Modifikationen ausgeführt werden, ohne den zugehörigen Schutzbereich der Ansprüche zu verlassen. Folglich soll die Erfindung nicht auf die offenbarten Ausführungsbeispiele begrenzt sein, sondern soll alle Ausführungsbeispiele umfassen, die in den Schutzbereich der beigefügten Patentansprüche fallen. Insbesondere beansprucht die Erfindung auch Schutz für den Gegenstand und die Merkmale der Unteransprüche.

**Bezugszeichenliste:**

| | | | |
|---|---|---|---|
| 10 | Bodenbearbeitungsvorrichtung | 42 | Sensoreinrichtung |
| 12 | Reihe, Pflanzenreihe, Saatkornreihe | | |
| 14 | Pflanze, Saatkorn | 100 | Bodenbearbeitungsmaschine |
| 16 | Dreipunkt-Anhängung | 102 | Fahrantrieb |
| 18 | Trägerkonstruktion | | |
| 20 | Fläche | A1 | horizontaler Abstand |
| 22 | Werkzeug | A2 | Abstand |
| 24 | Kurvenbahn | A3 | Längserstreckung |
| 26 | Steher | | |
| 28 | Schar | FR | Fahrtrichtung |
| 30 | Antriebsscheibe | | |
| 32 | Endlosmontageband | VB | Bewegungsgeschwindigkeit |
| 34 | Schwenklagerung | VF | Fahrgeschwindigkeit |
| 36 | Erfassungseinrichtung | VR | Relativgeschwindigkeit |
| 38 | Lockerungselement | α | Winkel |
| 40 | Verstelleinrichtung | | |

## Patentansprüche

1. Bodenbearbeitungsvorrichtung (10), vorzugsweise zur Bodenbearbeitung in einer Reihe (12) einer Reihenkultur, wobei die Bodenbearbeitungsvorrichtung (10) zur Montage an eine Trägerkonstruktion (18) und zur Bewegung mit einer Fahrgeschwindigkeit (VF) entlang einer Reihe (12) einer Reihenkultur auf einer landwirtschaftlichen Fläche (20) eingerichtet ist, wobei die Bodenbearbeitungsvorrichtung (10) Werkzeuge (22) aufweist, die dazu eingerichtet sind sternförmig entlang einer Kurvenbahn (24) mit veränderbarer Bewegungsgeschwindigkeit (VB) unter Durchführung von durch die Kurvenbahn (24) hervorgerufenen Schwenkbewegungen bewegt zu werden, **dadurch gekennzeichnet, dass** die durch die Kurvenbahn (24) hervorgerufenen Schwenkbewegungen der Werkzeuge (22), in einem Winkel (α) zur Fahrtrichtung (FR) und/oder zur Reihe (12) der Reihenkultur erfolgen, der mindestens 45° oder mindestens 60° oder mindestens 75° beträgt.

2. Bodenbearbeitungsvorrichtung (10) nach Anspruch 1, **dadurch gekennzeichnet, dass** zur Veränderung der Bewegungsgeschwindigkeit (VB), die Bewegungsgeschwindigkeit (VB) steuer- und/oder regelbar ist, vorzugsweise mittels einer Antriebseinrichtung steuer- und/oder regelbar ist, wobei ein steuern- und/oder regeln der Bewegungsgeschwindigkeit (VB) anhand einer Fahrgeschwindigkeit (VF) derartig erfolgt, dass eine Differenz der Fahrgeschwindigkeit (VF) und einer durch die Bewegungsgeschwindigkeit (VB) hervorgerufene Relativgeschwindigkeit (VR) der Werkzeuge (22) in Fahrtrichtung (FR) im Wesentlichen null ist.

3. Bodenbearbeitungsvorrichtung (10) nach einem der vorhergehenden Ansprüche, **dadurch gekennzeichnet, dass** die Fahrgeschwindigkeit (VF) steuer- und/oder regelbar ist, vorzugsweise mittels eines Fahrantriebes (102) steuer- und/oder regelbar ist, wobei ein steuern- und/oder regeln der Fahrgeschwindigkeit (VF) anhand der Bewegungsgeschwindigkeit (VB) derartig erfolgt, dass eine Differenz der Fahrgeschwindigkeit (VF) und einer durch die Bewegungsgeschwindigkeit (VB) hervorgerufenen Relativgeschwindigkeit (VR) der Werkzeuge (22) in Fahrtrichtung (FR) im Wesentlichen null ist.

4. Bodenbearbeitungsvorrichtung (10) nach einem der vorhergehenden Ansprüche, **dadurch gekennzeichnet, dass** die Werkzeuge (22) in aufrechter Weise an einem, vorzugsweise verformbaren, Endlosmontageelement (32) angeordnet sind.

5. Bodenbearbeitungsvorrichtung (10) nach Anspruch 4, **dadurch gekennzeichnet, dass**
- der horizontale Abstand (A1) von zwei Werkzeugen (22) zueinander im Wesentlichen identisch ist zu einem Abstand A2) von zwei Pflanzen (14) und/oder Saatkörnern (14) einer Reihe (12) und/oder vorzugsweise mindestens 5cm oder mindestens 10cm und maximal 25cm oder maximal 30cm beträgt und/oder
- dass der horizontale Abstand (A1) von zwei Werkzeugen (22) auf dem Endlosmontageelement (32) veränderbar ist.

6. Bodenbearbeitungsvorrichtung (10) nach einem der vorhergehenden Ansprüche, **dadurch gekennzeichnet, dass**
- die Kurvenbahn (24) in Fahrtrichtung (FR) eine Längserstreckung (A3) aufweist welche größer oder gleich ist zu einem Horizontalen Abstand (A1) von zwei Werkzeugen (22) zueinander und/oder
- dass die Kurvenbahn (24) eine derartig aufrechte Ausrichtung aufweist, dass zwei Werkzeuge (22) übereinander entlang der Kurvenbahn (24) bewegbar sind.

7. Bodenbearbeitungsvorrichtung (10) nach Anspruch 6, **dadurch gekennzeichnet, dass** die Längserstreckung (A3) im Wesentlichen parallel zur Fahrtrichtung (FR) und/oder zu einer Reihe (12) einer Reihenkultur ist.

8. Bodenbearbeitungseinrichtung nach einem der vorhergehenden Ansprüche, **dadurch gekennzeichnet, dass** die Kurvenbahn (24) dazu eingerichtet ist,
- eine durch Schwenkbewegungen hervorgerufene Größe der Auslenkung der Werkzeuge (22) quer zur Fahrtrichtung (FR) zu definieren und/oder
- einen intervallweisen Wechsel der Positionen der Werkzeuge (22) zu definieren, insbesondere einen Wechsel zwischen
- einer Position links und/oder rechts neben einer Reihe (12) und einer Position der Werkzeuge (22) im Wesentlichen auf der Reihe (12) und/oder
- einer Position links neben der Reihe (12) und einer Position der Werkzeuge (22) im Wesentlichen auf der Reihe (12) und einer Position rechts neben der Reihe (12).

9. Bodenbearbeitungsvorrichtung (10) nach einem der vorhergehenden Ansprüche, **dadurch gekennzeichnet, dass** die Werkzeuge (22) in einer, keine Bewegungen ausführenden, Grundstellung eine nicht mittige Position gegenüber der Kurvenbahn (24) aufweisen, insbesondere keine Anordnung im Bereich der Reihe (12) der Reihenkultur aufweisen.

10. Bodenbearbeitungsvorrichtung (10) nach einem der vorhergehenden Ansprüche, **dadurch gekennzeichnet, dass** die Bodenbearbeitungsvorrichtung (10) zumindest zwei hintereinander angeordnete Werkzeuge (22) aufweist und die Kurvenbahn (24) dazu eingerichtet ist, derartige Schwenkbewegungen bei den Werkzeugen (22) hervorzurufen, dass zumindest ein Werkzeug (22) eine Position links und/oder rechts neben einer Reihe (12) aufweist und zumindest ein Werkzeug (22) eine Position im Wesentlichen auf der Reihe (12) aufweist.

11. Bodenbearbeitungsvorrichtung (10) nach einem der vorhergehenden Ansprüche, **dadurch gekennzeichnet, dass** die Schwenkbewegungen der Werkzeuge (22) vorzugsweise im Wesentlichen senkrecht zur Fahrtrichtung (FR) und/oder zur Reihe (12) der Reihenkultur erfolgen.

12. Verfahren zur Bodenbearbeitung in einer Reihe (12) einer Reihenkultur, **gekennzeichnet durch** die Schritte,
- Bereitstellen einer Bodenbearbeitungsvorrichtung (10) oder Bereitstellen mehrerer Bodenbearbeitungsvorrichtungen (10), mit Werkzeugen (22), welche Werkzeuge (22) sternförmig entlang einer Kurvenbahn (24) mit einer Bewegungsgeschwindigkeit (VB) unter Durchführung von durch die Kurvenbahn (24) hervorgerufenen Schwenkbewegungen bewegt werden, wobei die durch die Kurvenbahn (24) hervorgerufenen Schwenkbewegungen der Werkzeuge (22), in einem Winkel (α) zur Fahrtrichtung (FR) und/oder zur Reihe (12) der Reihenkultur erfolgen, der mindestens 45° oder mindestens 60° oder mindestens 75° beträgt,
- Bewegen der einen Bodenbearbeitungsvorrichtung (10) oder der mehreren Bodenbearbeitungsvorrichtungen (10) entlang einer Reihe (12) einer Reihenkultur mittels einer Fahrgeschwindigkeit (VF)
- Steuern- und/oder Regeln der Bewegungsgeschwindigkeit (VB) und/oder der Fahrgeschwindigkeit (VF) derartig, dass eine Differenz der Fahrgeschwindigkeit (VF) und einer durch die Bewegungsgeschwindigkeit (VB) hervorgerufenen Relativgeschwindigkeit (VR) der Werkzeuge (22) in Fahrtrichtung (FR) im Wesentlichen null ist.

13. Verfahren nach Anspruch 12, **gekennzeichnet durch** den Schritt,
- einmaliges und/oder kontinuierliches Erfassen einer Position zumindest einer Pflanze (14) und/oder eines Saatkorn einer Reihe (12) mittels einer Erfassungseinrichtung (36), und Bestimmung der Position der Pflanze (14) und/oder des Saatkorn (14) gegenüber zumindest einem Werkzeug (22), und Anpassung der Position des Werkzeugs (22) gegenüber der Pflanze (14) und/oder dem Saatkorn (14) auf eine Sollposition.

14. Verfahren nach zumindest einem der Ansprüche 12 bis 13, **dadurch gekennzeichnet, dass** eine Anpassung der Position der Werkzeuge (22) gegenüber der Pflanze (14) und/oder eines Saatkorns (14) durch zumindest einem von folgenden erfolgt,
- eine Erhöhung oder Verringerung der Bewegungsgeschwindigkeit (VB), und/oder
- eine Drehrichtungsumkehr der Bewegung der Werkzeuge (22) entlang der Kurvenbahn (24), und/oder
- eine Erhöhung oder Verringerung der Fahrgeschwindigkeit (VF).

15. Verfahren nach zumindest einem der Ansprüche 12 bis 14 **dadurch gekennzeichnet, dass** eine Anpassung der Position der Werkzeuge (22) nur erfolgt, wenn keines der Werkzeuge (22) eine mittige Position gegenüber der Kurvenbahn (24) aufweist und/oder wenn keines der Werkzeuge (22) eine Position im Bereich der Reihe (12) der Reihenkultur aufweist.

16. Verfahren nach zumindest einem der Ansprüche 12 bis 15 **dadurch gekennzeichnet, dass** die mehreren Bodenbearbeitungsvorrichtungen (10)
- eine zumindest weitgehend identische Bewegungsgeschwindigkeit (VB) aufweisen und/oder unterschiedliche Bewegungsgeschwindigkeiten (VB) aufweisen und/oder
- eine unterschiedliche oder identische Sollposition aufweisen und/oder
- derartig entlang der Kurvenbahn (24) bewegt werden, dass zumindest ein Zwischenraum zwischen zwei Pflanzen (14) und/oder Saatkörnern (14) einer Reihe (12) zumindest doppelt bearbeitet wird.

17. Landwirtschaftliche Bodenbearbeitungsmaschine (100), vorzugsweise zur Bodenbearbeitung in einer Reihe (12) einer Reihenkultur, insbesondere zur mechanischen Unkrautbekämpfung in einer Reihe (12) einer Reihenkultur, wobei die Bodenbearbeitungsmaschine (100) eingerichtet ist mit einer Fahrgeschwindigkeit (VF) entlang einer Reihe (12) einer Reihenkultur auf einer landwirtschaftlichen Fläche (20) bewegt zu werden und wobei die Bodenbearbeitungsmaschine (100) eine Trägerkonstruktion (18) aufweist, wobei an der Trägerkonstruktion (18) zumindest
- zwei Bodenbearbeitungsvorrichtungen (10) nebeneinander angebracht sind und/oder
- zwei Bodenbearbeitungsvorrichtungen (10) nebeneinander und zumindest zwei Bodenbearbeitungsvorrichtungen (10) hintereinander angebracht sind, **dadurch gekennzeichnet, dass** die Bodenbearbeitungsvorrichtungen (10) nach zumindest einem der Ansprüche 1 bis 11 ausgeführt sind und/oder dass die Bodenbearbeitungsmaschine (100) eingerichtet ist ein Verfahren nach zumindest einem der Ansprüche 12 bis 16 auszuführen.

18. Bodenbearbeitungsmaschine (100) nach Anspruch 17, **dadurch gekennzeichnet**, zwischen zwei quer zur Fahrtrichtung (FR) nebeneinander angeordneten Bodenbearbeitungsvorrichtungen (10) Lockerungselemente (38) angeordnet sind, wobei
- die Lockerungselemente (38) in dessen Höhenlage gegenüber den Bodenbearbeitungsvorrichtungen (10) veränderbar gelagert sind und/oder wobei
- die Bodenbearbeitungsvorrichtung (10) in dessen Höhenlage gegenüber den Lockerungselementen (38) und/oder der Trägerkonstruktion (18) gelagert sind.

19. Bodenbearbeitungsmaschine (100) nach wenigstens einem der Ansprüche 17 oder 18, **dadurch gekennzeichnet, dass** die Bodenbearbeitungsvorrichtungen (10) mittels einer Verstelleinrichtung (40) höhenverstellbar gegenüber der Trägerkonstruktion (18) gelagert sind.

20. Bodenbearbeitungsmaschine (100) nach Anspruch 19, **dadurch gekennzeichnet, dass** die Höhenlage der Bodenbearbeitungseinrichtung gegenüber der Trägerkonstruktion (18) Anhand einer Bewegungsgeschwindigkeit (VB) und/oder Anhand einer Fahrgeschwindigkeit (VF) und/oder Anhand einer Position der Werkzeuge (22) gegenüber einer Pflanze (14) und/oder einem Saatkorn (14) einer Reihe (12) veränderbar ist.

21. Bodenbearbeitungsmaschine (100) nach wenigstens einem der Ansprüche 17 bis 20, **dadurch gekennzeichnet, dass** die Bodenbearbeitungsmaschine (100) als selbstfahrende Bodenbearbeitungsmaschine (100) ausgeführt ist, vorzugsweise als autonome selbstfahrende Bodenbearbeitungsmaschine (100) ausgeführt ist.

## Claims

1. A soil-working apparatus (10), preferably for working soil in a row (12) of a row crop, wherein the soil-working apparatus (10) is configured to be mounted onto a support structure (18) and to be moved at a driving speed (VF) along a row (12) of a row crop on an area of agricultural land (20), wherein the soil-working apparatus (10) has tools (22) which are configured to be moved in a star-shaped manner along a curved path (24) at a variable speed of movement (VB) while performing pivoting movements brought about by the curved path (24), **characterized in that** the pivoting movements of the tools (22) brought about by the curved path (24) are realized at an angle (α) to the direction of travel (FR), and/or to the row (12) of the row crop, of at least 45° or at least 60° or at least 75°.

2. The soil-working apparatus (10) according to Claim 1, **characterized in that**, for varying the speed of movement (VB), the speed of movement (VB) is controllable and/or regulable, preferably is controllable and/or regulable by means of a drive device, wherein the speed of movement (VB) is controlled and/or regulated on the basis of a driving speed (VF) in such a way that a difference between the driving speed (VF) and a relative speed (VR), brought about by the speed of movement (VB), of the tools (22) in the direction of travel (FR) is substantially zero.

3. The soil-working apparatus (10) according to either of the preceding claims, **characterized in that** the driving speed (VF) is controllable and/or regulable, preferably is controllable and/or regulable by means of a traction drive (102), wherein the driving speed (VF) is controlled and/or regulated on the basis of the speed of movement (VB) in such a way that a difference between the driving speed (VF) and a relative speed (VR), brought about by the speed of movement (VB), of the tools (22) in the direction of travel (FR) is substantially zero.

4. The soil-working apparatus (10) according to one of the preceding claims, **characterized in that** the tools (22) are arranged in an upright state on a preferably deformable endless mounting element (32).

5. The soil-working apparatus (10) according to Claim 4, **characterized in that**
- the horizontal distance (A1) between two tools (22) is substantially identical to a distance (A2) between two plants (14) and/or seeds (14) of a row (12) and/or preferably at least 5 cm or at least 10 cm and at most 25 cm or at most 30 cm, and/or
- **in that** the horizontal distance (A1) between two tools (22) on the endless mounting element (32) is variable.

6. The soil-working apparatus (10) according to one of the preceding claims, **characterized in that**
- the curved path (24) has in the direction of travel (FR) a longitudinal extent (A3) which is greater than or equal to a horizontal distance (A1) between two tools (22), and/or
- **in that** the curved path (24) has such an upright orientation that two tools (22) are movable along the curved path (24) one above the other.

7. The soil-working apparatus (10) according to Claim 6, **characterized in that** the longitudinal extent (A3) is substantially parallel to the direction of travel (FR) and/or to a row (12) of a row crop.

8. The soil-working apparatus according to one of the preceding claims, **characterized in that** the curved path (24) is configured
- to define an extent of the deflection of the tools (22) transverse to the direction of travel (FR) that is brought about by pivoting movements, and/or
- to define a switch at intervals between the positions of the tools (22), in particular a switch between
- a position on the left and/or right next to a row (12) and a position of the tools (22) substantially on the row (12), and/or
- a position on the left next to the row (12) and a position of the tools (22) substantially on the row (12) and a position on the right next to the row (12) .

9. The soil-working apparatus (10) according to one of the preceding claims, **characterized in that** the tools (22), in a starting position, in which no movements are performed, have a non-central position in relation to the curved path (24), in particular are not arranged in the region of the row (12) of the row crop.

10. The soil-working apparatus (10) according to one of the preceding claims, **characterized in that** the soil-working apparatus (10) has at least two tools (22) which are arranged one behind the other, and the curved path (24) is configured to bring about such movements for the tools (22) that at least one tool (22) has a position on the left and/or right next to a row (12) and at least one tool (22) has a position substantially on the row (12).

11. The soil-working apparatus (10) according to one of the preceding claims, **characterized in that** the pivoting movements of the tools (22) are preferably realized substantially perpendicularly to the direction of travel (FR) and/or to the row (12) of the row crop.

12. A method for working soil in a row (12) of a row crop, **characterized by** the steps
- providing a soil-working apparatus (10), or providing multiple soil-working apparatuses (10), having tools (22), which tools (22) are moved in a star-shaped manner along a curved path (24) at a speed of movement (VB) while performing pivoting movements brought about by the curved path (24), wherein the pivoting movements of the tools (22) brought about by the curved path (24) are realized at an angle (α) to the direction of travel (FR), and/or to the row (12) of the row crop, of at least 45° or at least 60° or at least 75°,
- moving the one soil-working apparatus (10) or the multiple soil-working apparatuses (10) along a row (12) of the row crop by means of a driving speed (VF),
- controlling and/or regulating the speed of movement (VB) and/or the driving speed (VF) in such a way that a difference between the driving speed (VF) and a relative speed (VR), brought about by the speed of movement (VB), of the tools (22) in the direction of travel (FR) is substantially zero.

13. The method according to Claim 12, **characterized by** the step
- detecting once and/or continuously a position of at least one plant (14) and/or one seed of a row (12) by means of a detection device (36), and determining the position of the plant (14) and/or the seed (14) in relation to at least one tool (22), and adapting the position of the tool (22) in relation to the plant (14) and/or to the seed (14) according to a target position.

14. The method according to at least either of Claims 12 and 13, **characterized in that** an adaptation of the position of the tools (22) in relation to the plant (14) and/or to a seed (14) is realized by at least one of the following:
- increasing or reducing the speed of movement (VB), and/or
- reversing the turning direction for the movement of the tools (22) along the curved path (24), and/or
- increasing or reducing the driving speed (VF).

15. The method according to at least one of Claims 12 to 14, **characterized in that** an adaptation of the position of the tools (22) is realized only if none of the tools (22) has a central position in relation to the curved path (24) and/or if none of the tools (22) has a position in the region of the row (12) of the row crop.

16. The method according to at least one of Claims 12 to 15, **characterized in that** the multiple soil-working apparatuses (10)
- have an at least largely identical speed of movement (VB) and/or different speeds of movement (VB), and/or
- have a different or identical target position, and/or
- are moved along the curved path (24) in such a way that at least one intermediate space between two plants (14) and/or seeds (14) of a row (12) is worked at least twice.

17. An agricultural soil-working machine (100), preferably for working soil in a row (12) of a row crop, in particular for mechanical weed control in a row (12) of a row crop, wherein the soil-working machine (100) is configured to be moved at a driving speed (VF) along a row (12) of a row crop on an area of agricultural land (20), and wherein the soil-working machine (100) has a support structure (18), wherein the support structure (18) has at least
- two soil-working apparatuses (10) attached to it one next to the other, and/or
- two soil-working apparatuses (10) attached to it one next to the other and at least two soil-working apparatuses (10) attached to it one behind the other, **characterized in that** the soil-working apparatuses (10) are designed according to at least one of Claims 1 to 11, and/or **in that** the soil-working machine (100) is configured to carry out a method according to at least one of Claims 12 to 16.

18. The soil-working machine (100) according to Claim 17, **characterized in that** loosening elements (38) are arranged between two soil-working apparatuses (10) arranged one next to the other transversely to the direction of travel (FR), wherein
- the loosening elements (38) are mounted so as to be variable in the height position thereof in relation to the soil-working apparatuses (10), and/or wherein
- the soil-working apparatuses (10) are mounted in the height position thereof in relation to the loosening elements (38) and/or to the support structure (18).

19. The soil-working machine (100) according to at least either of Claims 17 and 18, **characterized in that** the soil-working apparatuses (10) are mounted so as to be height-adjustable in relation to the support structure (18) by means of an adjustment device (40).

20. The soil-working machine (100) according to Claim 19, **characterized in that** the height position of the soil-working device in relation to the support structure (18) is variable on the basis of a speed of movement (VB) and/or on the basis of a driving speed (VF) and/or on the basis of a position of the tools (22) in relation to a plant (14) and/or to a seed (14) of a row (12).

21. The soil-working machine (100) according to at least one of Claims 17 to 20, **characterized in that** the soil-working machine (100) is designed as a self-driving soil-working machine (100), preferably is designed as an autonomous self-driving soil-working machine (100).

## Revendications

1. Dispositif (10) de travail du sol, de préférence pour le travail du sol dans une rangée (12) d'une culture en rangées, le dispositif (10) de travail du sol étant adapté pour être monté sur une structure de support (18) et pour se déplacer à une vitesse d'avancement (VF) le long d'une rangée (12) d'une culture en rangées sur une surface agricole (20), le dispositif (10) de travail du sol comprenant des outils (22), qui sont adaptés pour être déplacés en étoile le long d'un chemin de came (24) avec une vitesse de déplacement (VB) variable tout en effectuant des mouvements de pivotement provoqués par le chemin de came (24), **caractérisé en ce que** les mouvements de pivotement des outils (22) provoqués par le chemin de came (24) sont effectués selon un angle (α) par rapport à la direction de l'avancement (FR) et/ou à la rangée (12) de la culture en rangées, qui est d'au moins 45° ou d'au moins 60° ou d'au moins 75°.

2. Dispositif (10) de travail du sol selon la revendication 1, **caractérisé en ce que**, pour modifier la vitesse de déplacement (VB), la vitesse de déplacement (VB) est apte à être commandée et/ou régulée, de préférence au moyen d'un dispositif d'entraînement, une commande et/ou une régulation de la vitesse de déplacement (VB) s'effectuant en utilisant une vitesse d'avancement (VF) de telle sorte qu'une différence entre la vitesse d'avancement (VF) et une vitesse relative (VR) des outils (22) provoquée par la vitesse de déplacement (VB) dans le sens d'avancement (FR) est sensiblement nulle.

3. Dispositif (10) de travail du sol selon l'une des revendications précédentes, **caractérisé en ce que** la vitesse d'avancement (VF) est apte à être commandée et/ou régulée, de préférence au moyen d'un système d'entraînement en déplacement (102), une commande et/ou une régulation de la vitesse d'avancement (VF) s'effectuant en utilisant de la vitesse de déplacement (VB) de telle sorte qu'une différence entre la vitesse d'avancement (VF) provoquée et une vitesse relative (VR) des outils (22) dans le sens de déplacement (FR) due à la vitesse de déplacement (VB) est sensiblement nulle.

4. Dispositif (10) de travail du sol selon l'une des revendications précédentes, **caractérisé en ce que** les outils (22) sont disposés de manière verticale sur un élément de montage sans fin (32), de préférence déformable.

5. Dispositif (10) de travail du sol selon la revendication 4, **caractérisé en ce que**
- la distance horizontale (A1) entre deux outils (22) est sensiblement identique à une distance (A2) entre deux plantes (14) et/ou graines (14) d'une même rangée (12) et/ou est de préférence d'au moins 5cm ou d'au moins 10cm et d'au plus 25cm ou d'au plus 30cm, et/ou
- **en ce que** la distance horizontale (A1) entre deux outils (22) est modifiable sur l'élément de montage sans fin (32) .

6. Dispositif (10) de travail du sol selon l'une des revendications précédentes, **caractérisé en ce que**
- le chemin de came (24) présente, dans le sens de l'avancement (FR), une extension longitudinale (A3) qui est supérieure ou égale à une distance horizontale (A1) entre deux outils (22) et/ou
- **en ce que** le chemin de came (24) présente une orientation verticale telle que deux outils (22) sont aptes à être déplacés l'un au-dessus de l'autre le long du chemin de came (24).

7. Dispositif (10) de travail du sol selon la revendication 6, **caractérisé en ce que** l'extension longitudinale (A3) est sensiblement parallèle au sens de l'avancement (FR) et/ou à une rangée (12) d'une culture en rangées.

8. Dispositif de travail du sol selon l'une des revendications précédentes, **caractérisé en ce que** le chemin de came (24) est agencé de façon à
- définir une grandeur de débattement des outils (22) transversalement au sens de l'avancement (FR) provoquée par des mouvements de pivotement et/ou
- définir un changement de position des outils (22) par intervalles, notamment une alternance entre
- une position à gauche et/ou à droite d'une rangée (12) et une position des outils (22) sensiblement sur la rangée (12) et/ou
- une position à gauche de la rangée (12) et une position des outils (22) sensiblement sur la rangée (12) et une position à droite de la rangée (12).

9. Dispositif (10) de travail du sol selon l'une des revendications précédentes, **caractérisé en ce que** les outils (22), dans une position de base n'effectuant aucun mouvement, présentent une position non centrale par rapport au chemin de came (24), en particulier ne présentent pas de disposition au niveau de la rangée (12) de la culture en rangées.

10. Dispositif (10) de travail du sol selon l'une des revendications précédentes, **caractérisé en ce que** le dispositif (10) de travail du sol comporte au moins deux outils (22) disposés l'un derrière l'autre et **en ce que** le chemin de came (24) est agencé pour provoquer des mouvements de pivotement des outils (22) amenant au moins un outil (22) à prendre une position à gauche et/ou à droite d'une rangée (12) et au moins un outil (22) à prendre une position sensiblement sur la rangée (12).

11. Dispositif (10) de travail du sol selon l'une des revendications précédentes, **caractérisé en ce que** les mouvements de pivotement des outils (22) sont de préférence sensiblement perpendiculaires au sens de l'avancement (FR) et/ou à la rangée (12) de la culture en rangées.

12. Procédé de travail du sol sur une rangée (12) d'une culture en rangées, **caractérisé par** les étapes suivantes :
- disposer d'un dispositif (10) de travail du sol ou disposer de plusieurs dispositifs (10) de travail du sol, avec des outils (22), lesquels outils (22) sont déplacés en étoile le long d'un chemin de came (24) avec une vitesse de déplacement (VB) en effectuant des mouvements de pivotement provoqués par le chemin de came (24), les mouvements de pivotement des outils (22) provoqués par le chemin de came (24) s'effectuant selon un angle (α) par rapport au sens de l'avancement (FR) et/ou à la rangée (12) de la culture en rangées, qui est d'au moins 45° ou d'au moins 60° ou d'au moins 75°,
- déplacer ledit un dispositif (10) de travail du sol ou les dispositifs (10) de travail du sol le long d'une rangée (12) d'une culture en rangées au moyen d'une vitesse d'avancement (VF)
- commander et/ou réguler la vitesse de déplacement (VB) et/ou la vitesse d'avancement (VF) de telle sorte qu'une différence entre la vitesse d'avancement (VF) et une vitesse relative (VR) des outils (22) dans le sens de l'avancement (FR) provoquée par la vitesse de déplacement (VB) soit sensiblement nulle.

13. Procédé selon la revendication 12, **caractérisé par** l'étape
- de détection unique et/ou continue d'une position d'au moins une plante (14) et/ou d'une graine d'une rangée (12) au moyen d'un dispositif de détection (36), et de détermination de la position de la plante (14) et/ou de la graine (14) par rapport à au moins un outil (22), et d'adaptation de la position de l'outil (22) par rapport à la plante (14) et/ou à la graine (14) à une position de consigne.

14. Procédé selon au moins une des revendications 12 à 13, **caractérisé en ce qu'**une adaptation de la position des outils (22) par rapport à la plante (14) et/ou à une graine (14) est réalisée par au moins l'un des moyens suivants,
- une augmentation ou une diminution de la vitesse de déplacement (VB), et/ou
- une inversion du sens de rotation du déplacement des outils (22) le long du chemin de came (24), et/ou
- une augmentation ou une diminution de la vitesse d'avancement (VF).

15. Procédé selon au moins une des revendications 12 à 14 **caractérisé en ce qu'**une adaptation de la position des outils (22) n'est effectuée que si aucun des outils (22) ne présente une position centrale par rapport au chemin de came (24) et/ou si aucun des outils (22) ne présente une position dans la zone de la rangée (12) de la culture en rangées.

16. Procédé selon au moins une des revendications 12 à 15, **caractérisé en ce que** la pluralité de dispositifs (10) de travail du sol
- ont une vitesse de déplacement (VB) au moins sensiblement identique et/ou présentent des vitesses de déplacement (VB) différentes et/ou
- présentent une position de consigne différente ou identique et/ou
- sont déplacés le long du chemin de came (24) de telle sorte qu'au moins un espace intermédiaire entre deux plantes (14) et/ou graines (14) d'une rangée (12) est au moins doublement travaillé.

17. Machine agricole (100) de travail du sol, de préférence pour le travail du sol dans une rangée (12) d'une culture en rangées, en particulier pour le désherbage mécanique dans une rangée (12) d'une culture en rangées, la machine (100) de travail du sol étant conçue pour être déplacée à une vitesse d'avancement (VF) le long d'une rangée (12) d'une culture en rangées sur une surface agricole (20) et la machine (100) de travail du sol présentant une structure porteuse (18) ; sur la structure porteuse (18), au moins
- deux dispositifs (10) de travail du sol sont montés l'un à côté de l'autre et/ou
- deux dispositifs (10) de travail du sol sont montés l'un à côté de l'autre et au moins deux dispositifs (10) de travail du sol sont montés l'un derrière l'autre, **caractérisé en ce que** les dispositifs (10) de travail du sol sont réalisés selon au moins une des revendications 1 à 11 et/ou **en ce que** la machine (100) de travail du sol est agencée pour mettre en œuvre un procédé selon au moins une des revendications 12 à 16.

18. Machine (100) de travail du sol selon la revendication 17, **caractérisée en ce que** des éléments d'ameublissement (38) sont disposés entre des dispositifs (10) de travail du sol disposés les uns à côté des autres transversalement au sens de l'avancement (FR), dans laquelle
- les éléments d'ameublissement (38) sont montés de manière à pouvoir être modifiés dans leur position en hauteur par rapport aux dispositifs (10) de travail du sol et/ou dans laquelle
- les dispositifs (10) de travail du sol sont montés dans leur position en hauteur par rapport aux éléments d'ameublissement (38) et/ou à la structure porteuse (18).

19. Machine (100) de travail du sol selon au moins une des revendications 17 ou 18, **caractérisée en ce que** les dispositifs (10) de travail du sol sont montés réglables en hauteur par rapport à la structure porteuse (18) au moyen d'un dispositif de réglage (40).

20. Machine (100) de travail du sol selon la revendication 19, **caractérisée en ce que** la position en hauteur du dispositif de travail du sol par rapport à la structure porteuse (18) est modifiable en utilisant une vitesse de déplacement (VB) et/ou en utilisant une vitesse d'avancement (VF) et/ou en utilisant une position des outils (22) par rapport à une plante (14) et/ou une graine (14) d'une rangée (12).

21. Machine (100) de travail du sol selon au moins une des revendications 17 à 20, **caractérisée en ce que** la machine (100) de travail du sol est réalisée sous forme de machine (100) de travail du sol automotrice, de préférence sous forme de machine (100) de travail du sol automotrice autonome.
